(19) Europäisches Patentamt
European Patent Office
Office européen des brevets

(11) **EP 1 157 078 B1**

(12) **EUROPÄISCHE PATENTSCHRIFT**

(45) Veröffentlichungstag und Bekanntmachung des Hinweises auf die Patenterteilung:
**03.09.2003 Patentblatt 2003/36**

(21) Anmeldenummer: **00906361.1**

(22) Anmeldetag: **21.02.2000**

(51) Int Cl.[7]: **C09K 19/02**, G02F 1/141

(86) Internationale Anmeldenummer:
**PCT/EP00/01395**

(87) Internationale Veröffentlichungsnummer:
**WO 00/050535 (31.08.2000 Gazette 2000/35)**

(54) **FLÜSSIGKRISTALLINE MATERIALIEN ZUR OPTISCHEN PHASENMODULATION**

LIQUID CRYSTALLINE MATERIALS FOR OPTIC PHASE MODULATION

MATIERES LIQUIDES-CRISTALLINES POUR LA MODULATION DE PHASE OPTIQUE

(84) Benannte Vertragsstaaten:
**AT BE CH CY DE DK ES FI FR GB GR IE IT LI LU MC NL PT SE**

(30) Priorität: **24.02.1999 DE 19908042**

(43) Veröffentlichungstag der Anmeldung:
**28.11.2001 Patentblatt 2001/48**

(73) Patentinhaber: **Deutsche Telekom AG 53113 Bonn (DE)**

(72) Erfinder:
• **DULTZ, Wolfgang**
  **D-65936 Frankfurt (DE)**
• **BERESNEV, Leonid**
  **Columbia, MD 21044 (US)**
• **HAASE, Wolfgang**
  **D-64354 Reinheim (DE)**
• **PIKIN, Sergei, A.**
  **Moscow, 113556 (RU)**
• **WEYRAUCH, Thomas**
  **D-64720 Michelstadt (DE)**

(56) Entgegenhaltungen:
• **WATANABE ET AL.: "antiferroelectric smectic liquid crystal formed by achiral twin dimer with two mesgenic groups linked by alkylene spacer" JAPANESE JOURNAL OF APPLIED PHYSICS, PART 2 (LETTERS), Bd. 37, Nr. 4A, 1. April 1998 (1998-04-01), Seiten L401-L403, XP000885224**
• **ATTARD G S ET AL: "NON-SYMMETRIC DIMERIC LIQUID CRYSTALS THE PREPARATION AND PROPERTIES OF THE -(4-CYANOBIPHENYL-4'YLOXY)- -(4-N-ALKYLANILINEBENZYLIDENE-4'OXY) ALKANES" LIQUID CRYSTALS,GB,TAYLOR AND FRANCIS LTD, LONDON, Bd. 16, Nr. 4, 1. April 1994 (1994-04-01), Seiten 529-581, XP000434147 ISSN: 0267-8292**
• **G.R. LUCKHURST ET AL.: "the intercalated smectic A phase The liquid crystal properties of the alpha-(4-cyanobiphenyl-4'-yloxy)-omega-(4-alkyloxycinnamate)alkanes" LIQUID CRYSTALS, Bd. 18, Nr. 5, 1995, Seiten 801-809, XP002138958**
• **TSVETKOV N V ET AL: "ELECTRO-OPTICAL PROPERTIES OF 4,4'-BIS-UW-(4-CYANOBIPHENYL-4'-YLOXYAL KYLOXY BIPHENYLS NEMATICS" LIQUID CRYSTALS,GB,TAYLOR AND FRANCIS LTD, LONDON, Bd. 22, Nr. 3, 1. März 1997 (1997-03-01), Seiten 245-253, XP000699097 ISSN: 0267-8292**
• **ROZHANSKII I L ET AL: "SYNTHESIS AND THERMAL PROPERTIES OF DIMERIC ALKOXY-SUBSTITUTED TOLANS" LIQUID CRYSTALS,GB,TAYLOR AND FRANCIS LTD, LONDON, Bd. 21, Nr. 5, 1. November 1996 (1996-11-01), Seiten 631-643, XP000639766 ISSN: 0267-8292**
• **DATABASE WPI Section Ch, Week 199644 Derwent Publications Ltd., London, GB; Class E19, AN 1996-439519 XP002138959 & JP 08 217728 A (SAGAMI CHEM RES CENTRE), 27. August 1996 (1996-08-27)**

**Beschreibung**

Die Erfindung betrifft ein flüssigkristallines Material mit einer lamellaren Schichtenstruktur sowie eine Vorrichtung zur Modulation von Licht, die ein derartiges flüssigkristallines Material aufweist.

Die Tendenz, Informationen nicht nur optisch zu übertragen, sondern auch optisch zu verarbeiten, hat den Bedarf von Bauelementen zur Kontrolle der Eigenschaften von Lichtstrahlen stark erhöht. Die Variation der Phase des Lichtes ist dabei auch in vielen adaptiven optischen Systemen, wie in astronomischen oder erdgebundenen Abbildungssystemen, in optischen Kommunikationssystemen oder in Systemen zur Turbulenzsimulation von fundamentaler Bedeutung. Bekannte dielektrische, elektrooptische Kristalle wie beispielsweise $LiNbO_3$, die insbesondere zur Wellenfrontkorrektur einsetzbar sind, weisen im Allgemeinen den Nachteil von langen Schaltzeiten, kleinen Apperturen und geringen Brechungsindexänderungen auf, wobei letzteres hohe Schaltspannungen zum Einstellen einer vorgegebenen Phasenmodulation notwendig macht.

In jüngster Vergangenheit ist das Interesse an Flüssigkristallen als vielversprechende Materialien für die Wellenfrontkontrolle gestiegen. Dabei werden die optischen Eigenschaften, beispielsweise durch Orientieren und Deformieren des lokalen Indexellipsoids des Materials elektrisch kontrolliert. Die wesentlichen elektrooptischen Effekte in Flüssigkristallen äußern sich i.d. R. in einer gleichzeitigen Änderung von Phase und Polarisation des durch den Flüssigkristall transmittierenden Lichtes, wobei jedoch die Polarisationsänderung insbesondere in adaptiven optischen Systemen und den meisten anderen Anwendungen der Phasenmodulation ein unerwünschter Nebeneffekt ist.

Lediglich der als S-Effekt bezeichnete elektrisch induzierte Übergang von einer homogenen planaren in eine homöotrope Orientierung in nematischen Flüssigkristallen kann eine reine Phasenmodulation bewirken, wenn linear polarisiertes Licht verwendet wird, dessen Polarisationsebene parallel zum Direktor des Flüssigkristalls in der homogenen, planaren Orientierung liegt. Derartige Materialien werden häufig in pixelierten elektrisch kontrollierten, ortsaufgelösten Phasenmodulatoren angewandt, jedoch auch in optisch adressierbaren Varianten, die zusätzlich eine photoleitfähige Schicht aufweisen. In beiden Fällen werden in der Regel zum Erreichen einer Phasenmodulation von $2\pi$ einige zehn Millisekunden benötigt, wobei höhere Phasenverzögerungen relativ große Schichtdicken von etwa 5 μm und eine elektrisch kontrollierbare Brechungsindexvariation von etwa $\Delta n=0,15$ erfordern. Da die Schaltzeiten mit der Zellendicke ansteigen, liegt die Taktfrequenz der gewöhnlich verwendeten, auf der Basis nematischer Flüssigkristalle arbeitenden Wellenfrontkorrektoren im Bereich von einigen Hz.

Dagegen ermöglichen chirale smektische ferroelektrische Flüssigkristalle Schaltzeiten im Bereich von Mikrosekunden. Bei der Anwendung derartiger ferrolektrischer Flüssigkristalle wurden bisher im Wesentlichen zwei Effekte in Betracht gezogen. In den US-Patentschriften 4,838,663 und 4,563,059 wird ein bistabiles Schalten zwischen zwei Oberflächen-stabilisierten Orientierungszuständen und in der Patentschrift CH-3722/87 die Deformation der helikalen Überstruktur beschrieben. Während im ersten Fall praktisch nur die optische Achse gedreht und keine Brechungsindexänderung auftritt, treten im zweiten Fall eine Drehung der optischen Achse und eine Brechungsindexvariation simultan auf. Die Effekte in den bekannten chiralen smektischen ferroelektrischen Flüssigkristallen haben aufgrund der Achsendrehung immer eine Polarisationsänderung des durch den Flüssigkristall transmittierenden Lichtes zur Folge, was die bekannten ferroelektrischen Kristalle für reine Wellenfrontkorrekturen ungeeignet erscheinen lässt.

Aus J. Watanabe et al. "Antiferroelectric Smectic Liquid Crystal Formed by Achiral Twin Dimer with Two Mesogenic Groups Linked by Alkylene Spacer", Jpn. J. Appl. Phys. Vol. 37 (1998), pp. L401-L403 sind antiferroelektrische smektische Flüssigkristalle aus nicht-chiralen Dimeren bekannt. Diese Flüssigkristalle besitzen aber nicht die Eigenschaft der optischen Phasenmodulation.

Aus G.S. Attard et al. "Non-Symmetric Dimeric Liquid Crystals. The Preparation and Properties of the α-(cianobiphenyl-4'-yloxy)-ω-(4-n-alkylanilinebenzylidene-4'-oxy)alkanes", Liquid Crystals, 1994, Vol. 16, No. 4, 529-581 ist eine Untersuchung von strukturellen Eigenschaften von nicht-symmetrischen dimerischen Flüssigkristallen bekannt, bei welcher die Mesophasen von synthetisierten Zusammensetzungen identifiziert wird. Weder eine optische Phasenmodulation noch elektro-optische Eigenschaften werden diskutiert.

Auf dem Gebiet auch bekannt sind polyphile Flüssigkristalle, deren Moleküle in der Regel aus einer rigiden, gut polarisierbaren, meist zwei oder drei Phenylringe umfassende Zentralgruppe und zwei flexiblere Flügelgruppen, insbesondere aliphatische Ketten aufgebaut sind. Durch Ersetzen einer aliphatischen Flügelgruppe durch eine perfluorierte Kette wird eine polyphile Separation der Molekülteile erreicht, wodurch sich die Moleküle im flüssigkristallinen Zustand so anordnen, dass die perfluorierten Gruppen überwiegend in die gleiche Richtung zeigen. Dieses Verhalten wurde von Tournilhac et al. in "Ferroelectrics", Band 114, Seiten 283-287, 1991 bzw. "Liquid Cristals", Band 14, Seiten 405-414, 1993 nachgewiesen. Bei dem untersuchten Material F$(CF_2)_8(CH_2)_{11}$-O-Ph-Ph-CN wurde ein optischer Tiltwinkel θ von 48° und ein Neigungswinkel $\theta_F$ der fluorierten Kette von 28°, bei dem Material F$(CF_2)_8(CH_2)_{11}$-O-Ph-$_N$Ph-CN ein optischer Tiltwinkel θ von 49° und ein Neigungswinkel $\theta_F$ der fluorierten Kette von 30° und bei der Substanz F$(CF_2)_8(CH_2)_{11}$-O-Ph-Ph-CO-O-CH$_2$CF$_3$ ein optischer Tiltwinkel θ von 51° und ein Neigungswinkel $\theta_F$ der fluorierten Kette von 33° ermittelt, wobei Ph als Abkürzung für einen Phenylring und $_N$Ph für einen Pyridinring steht. Es wurde für die genannten polyphilen Flüssigkristalle mit perfluorierten perfluorierten Ketten gezeigt, dass der durch die rigide Zentralgruppe bestimmte optische Tiltwinkel θ und der Neigungswinkel $\theta_F$ der perfluorierten Kette gegenüber der Schichtnormalen z unterschiedlich ist. Weiterhin wurde festgestellt, dass bei der Verwendung von perfluorierten . Ketten eine Reduzierung der molekularen Rotationsviskosität von ferroelektrischen Flüssigkristallen auftritt und damit niedrige Schaltzeiten im Bereich von weniger als 15 μsec erreichbar sind.

Der wesentliche Nachteil bei den beschriebenen Flüssigkristallen ist die im Allgemeinen auftretende Polarisationsmodulation, die bei den meisten Anwendungen der Phasenmodulation nicht akzeptierbar ist. Die Aufgabe der Erfindung besteht somit darin, ein flüssigkristallines Material mit lamellarer Struktur bereitzustellen, welches zur ausschließlichen Phasenmodulation einsetzbar ist.

Diese Aufgabe wird schon durch ein flüssigkristallines Material mit den Merkmalen des Anspruchs 1 gelöst. Zur Bereitstellung einer neuen Flüssigkkristall-Materialklasse mit einer lamellaren Schichtenstruktur weist der Flüssigkristall bogen- oder winkelförmige Dimer-Moleküle auf, die jeweils zwei Zentraleinheiten umfassen, wobei die Längsachsen der beiden Zentraleinheiten zumindest näherungsweise entgegengesetzte, insbesondere entgegengesetzte Neigungswinkel zur Schichtennormalen aufweisen. Durch die erfindungsgemäße Anordnung der beiden Zentraleinheiten des Dimer-Moleküls wird erreicht, dass das molekulare Indexellipsoid, welches sich im Wesentlichen aus den Anteilen der beiden gut polarisierbaren Zentraleinheiten zusammensetzt, so angeordnet ist, dass die optische Achse immer parallel zur Schichtennormalen liegt und damit eine Polarisationsmodulation von Licht, welches in definierter Richtung senkrecht zur Schichtennormalen durch das flüssigkristalline Material transmittiert, verhindert werden kann.

Vorteilhafte Weiterbildungen der Erfindung sind in den Unteransprüchen angegeben.

Um die gewünschte Phasenmodulation zu maximieren, kann je nach Ausführungsform der Erfindung der Betrag der beiden Neigungswinkel im Bereich zwischen etwa 10 und 90° liegen. Beide Zentraleinheiten können zum Gestalten des Dimer-Moleküls unter Ausbilden einer Scheitelspitze miteinander verbunden sein, wobei die Verbindung über zumindest eine neutrale, molekulare Kette gestaltet sein kann. Je nach Ausführungsform der Erfindung kann die Scheitelspitze zwischen den beiden Zentraleinheiten des Dimer-Moleküls eine Winkelspitze oder bei der Ausführung einer Bogens zwischen den Zentraleinheiten auch ein Bogenmittelpunkt sein.

Die erfindungsgemäße Gestaltung des flüssigkristallinen Materials lässt sich auf eine Vielzahl von thermotropen und lyotropen Flüssigkristallen anwenden. Dabei können die Scheitelspitzen der Dimer-Moleküle benachbarter Schichten annähernd gleichgerichtet sein oder in einer anderen Ausführungsform, annähernd entgegengesetzt gerichtet sein, wodurch sich eine Doppelschicht-Struktur ausbildet.

Zur Erzeugung einer helikalen Struktur mit vorgegebener Ganghöhe, welche durch das Anlegen eines äußeren elektrischen Feldes aufhebbar ist, so dass eine Phasenmodulation einstellbar ist, können sich die Azimutwinkel der Scheitelspitzen aufeinanderfolgender Schichten gleichmäßig um einen vorgegebenen Wert ändern, so dass die Scheitelspitzen entlang der z-Richtung rotieren. Es ist jedoch zur Ausbildung einer helikalen Struktur mit Doppelschichten und einer vorgegebenen Ganghöhe auch möglich, dass sich der Azimutwinkel eines Paares von Scheitelspitzen aufeinanderfolgender Doppelschichten gleichmäßig um einen vorgegebenen Wert, so dass die Paare von Scheitelspitzen entlang der z-Richtung rotieren.

Damit ein äußeres elektrisches Feld an das bogen- oder winkelförmige Dimer-Moleküle angreifen kann, weisen die Moleküle jeweils ein transversales Dipolmoment auf. Liegt das Dipolmoment senkrecht zur optischen Achse, d. h. zur Schichtennormalen, kann das elektrische Feld optimal zur Veränderung der helikalen Struktur und damit zur Erzeugung einer reinen Phasenmodulation wirken.

Zur Erzeugung der beschriebenen helikalen Struktur können die Dimer-Moleküle zumindest ein chirales Zentraum, insbesondere außerhalb der rigiden Zentraleinheiten aufweisen. Die Bereitstellung eines derartigen chiralen Zentrums im Dimer-Molekül weist zusätzlich den Vorteil auf, dass es im Zusammenspiel mit anderen Molekülanteilen des Dimers ein permanentes Dipolmoment erzeugen kann. Zur Ausbildung spezifischer helikaler Strukturen ist es auch möglich, dass die Dimer-Moleküle jeweils zwei chirale Zentren aufweisen.

Zur Gestaltung der Dimer-Moleküle des erfindungsgemäßen flüssigkristallinen Materials können die Moleküle zwischen den beiden Zentraleinheiten bzw. als Flügelgruppen zumindest ein aliphatisches Fragment aufweisen. Erfindungsgemäß können aliphatische dies Fragmente aus Kohlenstoffketten in der Form $-(CH_2)_n$-gebildet sein, wobei n im Intervall von 0 bis 16 liegt.

Um sicherzustellen, dass sich makroskopisch eine spontane Polarisation des erfindungsgemäßen flüssigkristallinen Materials ausbildet, können die Dimer-Moleküle jeweils zumindest ein polyphiles Fragment umfassen, welches asymmetrisch zur Scheitelspitze des Moleküls angeordnet ist. Die asymmetrische polyphile Molekülstruktur hat zur Folge, dass eine Parallelstellung benachbarter Moleküle innerhalb einer Schicht gegenüber der Antiparallelstellung bevorzugt wird und damit eine spontane Polarisation innerhalb einer Schicht vorliegt. Sie verhindert somit die gegenseitige Kompensation der Dipolmomente zweier benachbarter Moleküle, die entgegengesetzt orientiert sind, da beide Orientierungsmöglichkeiten ansonsten energetisch gleichwertig und daher im mittel gleich häufig besetzt sind. Da die entgegengesetzt orientierten Moleküle Dipolmomente mit entgegengesetztem Vorzeichen aufweisen, tritt im Falle der Antiparallelstellung keine spontane Polarisation auf. Erfindungsgemäß kann die asymmetrische polyphile Molekülstruktur dadurch erreicht werden, dass das polyphile Fragment zumindest eine perfluorierte Kette der Form $-(CF_2)_n$-aufweist, wobei n zwischen 4 und 16 liegen kann.

Die Ganghöhe der helikalen Struktur kann je nach Ausführungsform der Erfindung bei Abwesenheit eines äußeren elektrischen Feldes im Bereich zwischen 50 bis 1400 nm liegen.

Das erfindungsgemäße flüssigkristalline Material kann überaus vorteilhaft zur Phasenmodulation von Licht, beispielsweise in einer entsprechenden Vorrichtung verwendet werden. Eine derartige Vorrichtung zeichnet sich dadurch aus, dass ein elektrisches Feld im Wesentlichen senkrecht zur Schichtennormalen erzeugbar ist und das Licht in einer Richtung senkrecht zur Schichtennormalen durch das flüssigkristalline Material tansmittiert. Damit kann verhindert werden, dass das Licht neben der gewünschten Phasenmodulation eine Polarisationsmodulation erleidet. Mittels des erfindungsgemäßen flüssigkristallinen Materials lassen sich Phasenmodulatoren vom Reflexionstyp als auch vom Transmissionstyp aufbauen. Weiterhin kann durch eine Multi-Pixel-Struktur auch ortsaufgelöst die Phase von Licht moduliert werden. Die physikalischen Eigenschaften des flüssigkristallinen Materials ermöglicht weiterhin optisch adressierbare, ortsaufgelöste Phasenmodulatoren, bei welchen eine photoleitfähige Schicht zur Erzeugung eines ortsaufgelösten äußeren Feldes mittels Lichteinstrahlung verwendet wird.

Die Erfindung wird im Folgenden durch das Beschreiben einiger Ausführungsformen unter Bezugnahme auf die Zeichnungen erläutert, wobei

Fig. 1    die helikale Struktur einer Ausführungsform des flüssigkristallinen Materials,

Fig. 2    die helikale Struktur eines flüssigkristallinen Materials nach dem Stand der Technik,

Fig. 3    die helikale Struktur einer weiteren Ausführungsform des erfindungsgemäßen flüssigkristallinen Materials,

Fig. 4    die Zusammensetzung der Indikatrix für das DimerMolekül aus den Anteilen der Zentraleinheiten,

Fig. 5    die berechneten, gemittelten Brechungsindizes eines erfindungsgemäßen flüssigkristallinen Materials bei undeformierter Helix in Abhängigkeit des Neigungswinkels θ,

Fig. 6    die berechneten gemittelten Brechungsindizes eines erfindungsgemäßen flüssigkristallinen Materials bei völlig entwundener Helix in Abhängigkeit des Neigungswinkels θ,

Fig. 7    das Maximum der Brechungsindexmodulation $\delta n_x$ eines erfindungsgemäßen flüssigkristallinen Materials in Abhängigkeit des Neigungswinkels θ,

Fig. 8    die Abhängigkeit der Brechungsindexvariation von der elektrischen Feldstärke E und des Neigungswinkels θ,

Fig. 9    einen beipielhaften Aufbau des Dimer-Moleküls und die Anordnung der Moleküle innerhalb einer Schicht,

Fig. 10   einen anderen beispielhaften Aufbau des DimerMoleküls und die Anordnung der Moleküle innerhalb einer Schicht,

Fig. 11   einen weiteren beispielhaften Aufbau des DimerMoleküls und die Anordnung dieser Moleküle innerhalb einer Schicht,

Fig. 12   den Aufbau einer ferroelektrischen Überstruktur,

Fig. 13   den Aufbau einer antiferroelektrischen Überstruktur,

Fig. 14   eine weitere ferroelektrische Überstruktur mit Dimer-Moleküle, welche zwei chirale Zentren aufweisen,

Fig. 15   den Aufbau einer weiteren antiferroelektrischen Überstruktur,

Fig. 16   einen beispielhaften Phasenmodulator, in welchem das erfindungsgemäße flüssigkristalline Material verwendet wird, und

Fig. 17   einen weiteren beispielhaften, mit dem erfindungsgemäßen Flüssigkristall verwendbaren Phasenmodulator zeigt, welcher durch den Einsatz eines Photoleiters optisch adressierbar ist.

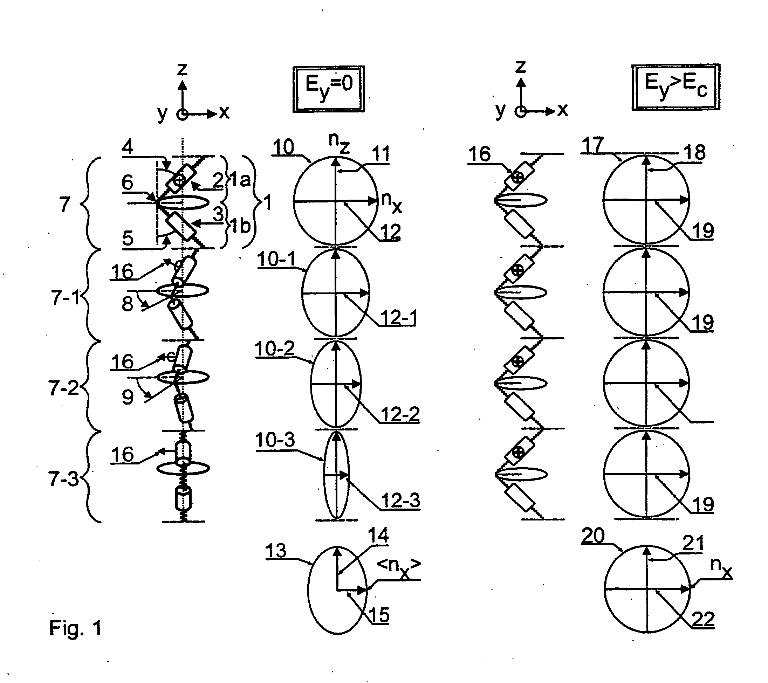

Die nachfolgend beschriebenen, beispielhaften und erfindungsgemäßen flüssigkristallinen Materialien weisen eine smektische Schichtenstruktur auf, wobei der Flüssigkristall durch Moleküle gebildet wird, die aus zwei Untereinheiten 1a und 1b bestehen, deren Längsachsen gegeneinander so geneigt sind, dass das gesamte Molekül eine bogen- bzw. winkelförmige Gestalt annimmt, siehe Fig. 1. Die Untereinheiten 1a und 1b bestehen jeweils aus einer rigiden, gut elektronisch polarisierbaren Zentralgruppe (2, 3) und einer flexibleren Flügelgruppe, die in mindestens einer der beiden Untereinheiten 1a und 1b ein chirales Zentrum enthält. Die beiden Zentralgruppen 2 bzw. 3 weisen zumindest näherungsweise einen entgegengesetzten, vorzugsweise genau entgegengesetzte Neigungswinkel 4 bzw. 5 zur Schichtennormalen z auf. Die Zentraleinheiten 2 und 3 sind über neutrale molekulare Ketten wie beispielsweise aliphatische Ketten, Siloxane oder fluorierte Alkylketten verbunden. Zur Realisierung der winkelförmigen Gestalt kann auch ein Ringsystem wie beispielsweise ein metasubstituierter Phenylring im Bogenmittelpunkt bzw. der Winkelspitze 6 vorhanden sein. Zur Vereinfachung der Darstellung wird im folgenden der Bogenmittelpunkt bzw. die Winkelspitze als Scheitelspitze bezeichnet. Die Längsachsen der Untereinheiten 1a und 1b werden durch die Längsachsen der Zentralgruppen 2 und 3 definiert. Wie erwähnt bilden die Moleküle eine smektische Phase mit den Schichten 7, 7-1, 7-2, 7-3 aus, siehe Figur 1. Aufgrund von chiralen Zentren in den Molekülen bildet sich eine helikale Überstruktur, welche sich durch eine geringe Drehung um die Schichtnormale z der durch die Längsachsen der Zentralgruppen 2 und 3 aufgespannten Bogenebene von Schicht zu Schicht entlang der Schichtnormalen z auszeichnet. Die Verdrehung der Scheitelspitze 6 in der Azimutalebene xy beim Übergang von Schicht 7 zu Schicht 7-1 ist durch den Winkel 8 gekennzeichnet. In Figur 1 ist ein Viertel der Helixganghöhe schematisch dargestellt.

Die Brechungsindizes jeder einzelnen Schicht 7, 7-1, 7-2, etc. sind durch ein zugehöriges Indexellipsoid (Indikatrix) definiert. In Fig. 1 ist jeweils die Schnittellipse 10, 10-1, 10-2, etc. mit der xz-Ebene dargestellt, die für in y-Richtung propagierendes Licht gilt. Die zur Schichtnormalen z parallele Hauptachse 11 ist für alle Schichten 7, 7-1, etc. gleich, während die Hauptachsen 12, 12-1, 12-2, etc. aufgrund der Drehung der Bogenebene von Schicht zu Schicht variieren. Für die gesamte helikale Struktur ergibt sich eine gemittelte Indikatrix, deren Schnittellipse 13 mit der xz-Ebene in Fig. 1 dargestellt ist. Die zu z parallele Hauptachse 14 ist identisch mit der Hauptachse 11 der einzelnen Schichten, während die zu x parallele Hauptachse 15, welche den Brechungsindex $<n_x>$ darstellt, sich aus einer Mittelung über alle möglichen Azimutal-Winkel ergibt. Aufgrund der Symmetrie der helikalen Struktur ist das gemittelte Brechungsindexellipsoid ein Rotationsellipsoid mit z als Rotationsachse, d.h. bei ungestörter Helix gilt $<n_y> = <n_x>$. Bei Ganghöhen unterhalb der Lichtwellenlängen werden die optischen Eigenschaften durch eine Mittelung der Eigenschaften der einzelnen Schichten bestimmt. Da die Moleküle des kristallinen Materials ein chirales Zentrum in mindestens einer Untereinheit enthalten, entsteht eine spontane Polarisation mit einem lokalen Dipolmoment 16, das senkrecht zur Schichtnormalen z und senkrecht zur Bogenebene des jeweiligen Moleküls 1 steht. Durch die Wechselwirkung dieser Dipolmomente mit einem in y-Richtung angelegten elektrischen Feld $E_y$ wird die Helix deformiert und im Extremfall völlig aufgewunden, siehe rechter Teil der Figur

1. In diesem Extremfall sind die Indexellipsoide bzw. die Schnittellipsen 17 durch die xz-Ebene mit den Hauptachsen 18 und 19 identisch und entsprechen dem molekularen Indexellipsoid. Das Indexellipsoid der Gesamtstruktur, dessen Schnitt 20 mit der xz-Ebene mit den beiden Hauptachsen 21 und 22 in Fig. 1 dargestellt ist, entspricht dem der einzelnen Schichten. Demnach verändert sich die Lage der 3 Hauptachsen des Indexellipsoides unter Einwirkung eines elektrischen Feldes nicht, sie sind immer parallel zu den 3 Koordinatenachsen x, y und z. Die zu z parallele-Hauptachse, die den Brechungsindex $n_z$ angibt, ist in allen Fällen (11, 18, 21) gleich. Der Brechungsindex $n_z$ ist demnach in der helikalen, der deformierten helikalen und der völlig aufgewunden Struktur identisch. Im Gegensatz dazu variiert der Brechungsindex mit ansteigendem elektrischen Feld $E_y$ vom gemittelten Wert $<n_x>$ der Schnittellipse 13 zum molekularen Wert $n_x$ der Schnittellipse 20. Dies bedeutet, das in y-Richtung propagierendes Licht, welches parallel zu den smektischen Schichten, d.h. parallel zur x-Achse linear polarisiert ist, eine vom elektrischen Feld abhängige Phasenschiebung ohne Änderung der Polarisationsebene erfährt. Der Maximalwert der Phasenschiebung wird durch die Differenz der Werte der beiden Hauptachsen 15 und 22 bestimmt und skaliert linear mit der Dicke der Flüssigkristallschicht in y-Richtung.

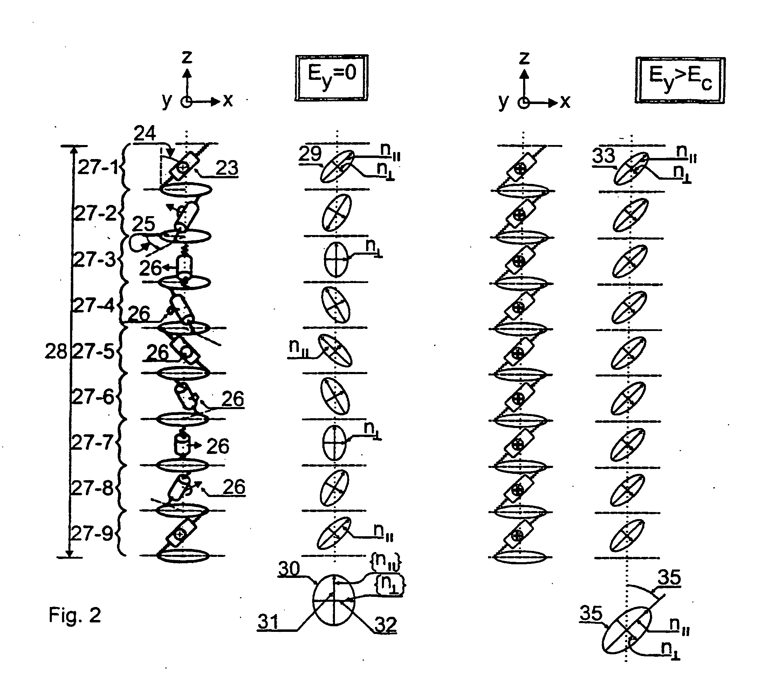

zur Verdeutlichung der Erfindung ist in Fig. 2 der Aufbau und die Schichtenstruktur eines bekannten chiralen smektischen ferroelektrischen Flüssigkristalls dargestellt. Die Moleküle sind in Schichten 27-1, 27-2, etc. angeordnet. Innerhalb einer Schicht besitzen die Molekülllängsachsen eine Vorzugsrichtung, welche den Direktor angibt. Der Direktor ist gegenüber der Schichtnormale Z um den Tiltwinkel 24 geneigt. Auch hier bildet sich eine helikale Überstruktur aus, die durch die Ganghöhe 28 charakterisiert wird. Für eine Lichtausbreitung in y-Richtung ist die Schnittellipse 29 des Indexellipsoids mit der xz-Ebene maßgebend. Sie variiert in Bezug zu ihren Hauptachsen von Schicht zu Schicht, d.h. die optische Achse ist im Gegensatz zu dem in Fig. 1 dargestellten Fall nicht fest. Falls die Ganghöhe 28 kleiner als die Lichtwellenlänge ist, werden die optischen Eigenschaften wieder durch eine durch Mittelung der lokalen Eigenschaft berechenbare effektive Indikatrix charakterisiert, die aufgrund der Symmetrie der Phase wieder ein Rotationsellipsoid mit z als Rotationsachse darstellt. Im Gegensatz zum vorhergehenden Fall mit den erfindungsgemäßen Flüssigkristall dreht sich die optische Achse der effektiven Indikatrix, wenn durch ein äußeres Feld die Helix entwunden wird, siehe die Schnittellipse 34 in

Fig. 2. Da die optische Achse nicht fest liegt, erleidet Licht, welches durch den Flüssigkristall transmittiert die obenstehend erwähnte, unerwünschte Polarisationsmodulation, die wie gezeigt, beim erfindungsgemäßen Flüssigkristall nicht auftritt.

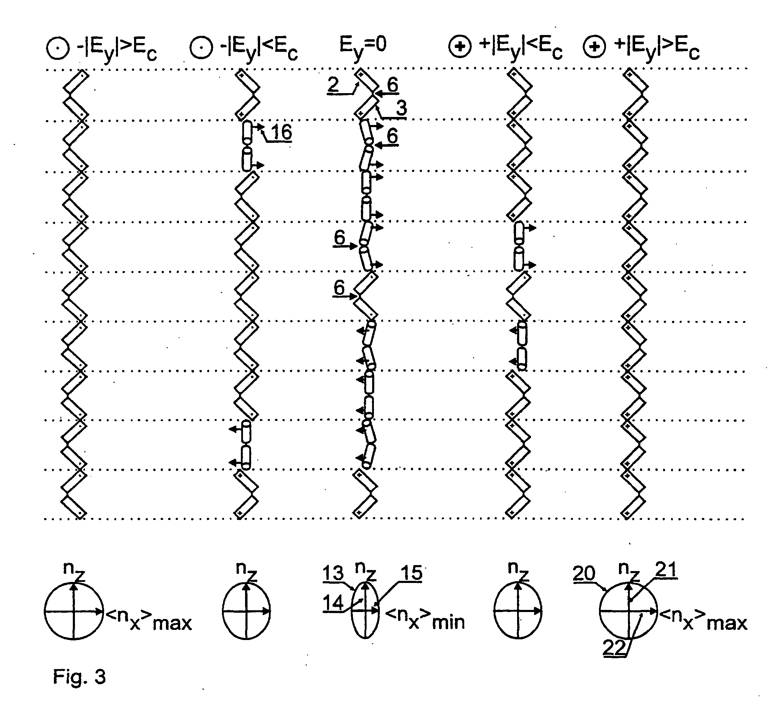

Je nach Ausführungsform der Erfindung können die Richtungen der Scheitelspitzen 6 benachbarter Schichten, d.h. die Orientierung der Bogenebenen annähernd gleich oder aber einen Azimutwinkel von nahezu 180° Grad einnehmen, was im ersten Fall einer ferroelektrischen Struktur und im zweiten Fall einer antiferroelektrischen Struktur entspricht. Ein Beispiel für eine antiferroelektrische Struktur ist in Fig. 3 angegeben. Die Scheitelspitzen 6 benachbarter Schichten sind etwa entgegengesetzt ausgerichtet, so dass Doppelschichten 7, 7A; 7-1, 7A-1, etc. ausgebildet sind. Der Brechungsindex $<n_x>$, welcher der Halbachse 15 der Schnittellipse 13 entspricht, kann mittels eines elektrischen Feldes $E_x$ von $<m_x>_{min}$ bis $<n_x>_{max}$ variiert werden. Im Extremfall der völligen Aufwindung der Helix oberhalb einer charakteristischen Schwellfeldstärke $E_C$ sind die Zustände in der ferroelektrischen und der antiferroelektrischen Struktur optisch gleichwertig. Für Feldstärken kleiner als die Schwellefeldstärke kann der Brechungsindex kontinuierlich variiert werden, ohne dass zusätzlich eine Polarisationsmodulation auftritt.

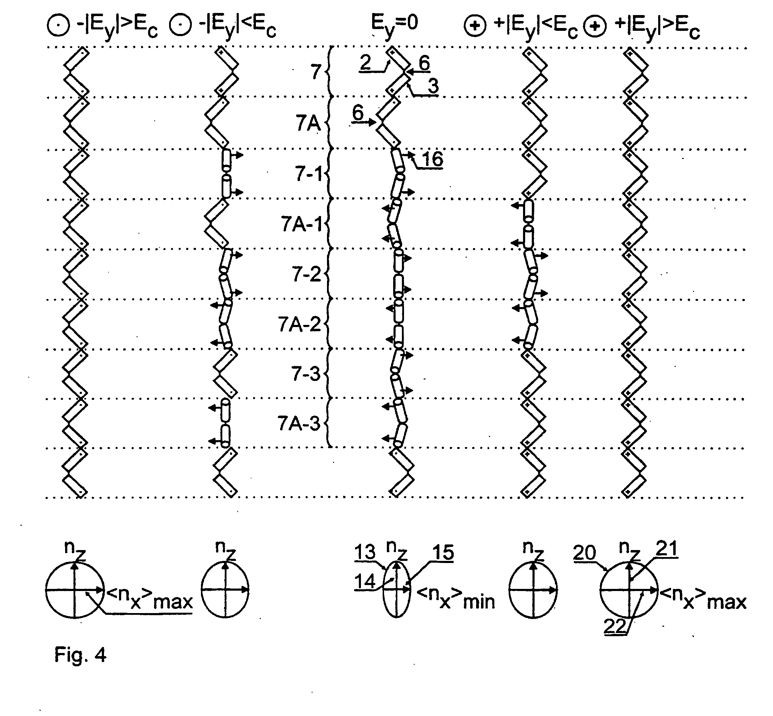

Um die erreichbare Phasenmodulation anzugeben, wurden die Brechungsindizes der deformierten und der undeformierten helikalen Flüssigkristallstrukturen berechnet. Dabei wird davon ausgegangen, dass die gut polarisierbaren rigiden Zentren 2, 3 der Untereinheiten 1a, 1b maßgebend sind, siehe Fig. 4. Für jede Zentraleinheit des Dimer-Moleküls ist die Schnittellipse 2', 3' des molekularen Indexellipsoids mit der xz-Ebene dargestellt. Die Halbachsen der Schnittellipsen 2', 3' entsprechen den molekularen Brechungsindizes $n_\parallel$ entlang der Längsachse und $n_\perp$ senkrecht zur Längsachse. Durch die Addition der Indexellipsoide der Zentraleinheiten 2 und 3 im dargestellten Koordinatensystem ergibt sich die Indikatrix 10 des gesamten bogen- bzw. winkelförmigen Moleküls 1. Charakteristisch für den erfindungsgemäßen Flüssigkristall ist, dass der molekulare Indexellipsoid im gewählten Koordinatensystem in Fig. 4 mit der optischen Achse parallel zu der Schichtennormale Z in Diagonalform vorliegt, da sich die Nichtdiagonal-Elemente der beiden Zentraleinheiten gegenseitig aufheben, wobei angenommen wurde, dass eine eventuelle vorhandene Biaxialität vernachlässigbar klein ist.

Mit der gewählten Moleküllage in der xz-Ebene entspricht der sich ergebene Tensor auch dem Tensor einer durch Anlegen eines ausreichend hohen elektrischen Feldes $E_y$ völlig entwundenen Helix, siehe dem in Fig. 1 auf der rechten Seite dargestellten Fall.

Die Brechungsindizes für das Gesamtmolekül ergeben sich zu:

$$n_x = \sqrt{n_\perp^2 \cos^2\theta + n_\parallel^2 \sin^2\theta};$$

$$n_y = n_\perp;$$

$$n_z = \sqrt{n_\perp^2 \sin^2\theta + n_\parallel^2 \cos^2\theta};$$

Andere in der helikalen Struktur vorkommene Molekülorientierungen lassen sich durch einen von Null verschiedenen Azimutwinkel $\varphi$, d.h. der Winkel zwischen der Schnittgeraden der Bogenebene mit der xy-Ebene und der X-Achse, beschreiben. Liegt bei den erfindungsgemäßen Materialien eine ungestörte Helix vor, berechnen sich die Brechungsindizes aus der Mittelung eines $\varphi$-abhängigen $\varepsilon$-Tensors im Intervall von 0 bis $2\pi$ für den Winkel $\varphi$, wobei alle Werte von $\varphi$ gleich gewichtet werden. Daraus ergeben sich die gemittelten Brechungsindices:

$$<n_x>=<n_y>= \sqrt{(n_\perp^2(1 + \cos^2\theta) + n_\parallel^2 \sin^2\theta)/2}$$

$$<n_z> = \sqrt{n_\perp^2 \sin^2\theta + n_\parallel^2 \cos^2\theta)}$$

Wird ein elektrisches Feld, welches kleiner als die Schwellenfeldstärke $E_C$ ist, in y-Richtung an das erfindungsgemäße Flüssigkristallmaterial angelegt, erfolgt eine Deformation der Helix, so dass die Werte für den Winkel $\varphi$ nicht mehr gleich verteilt sind. Die Deformation kann näherungsweise numerisch berechnet werden.

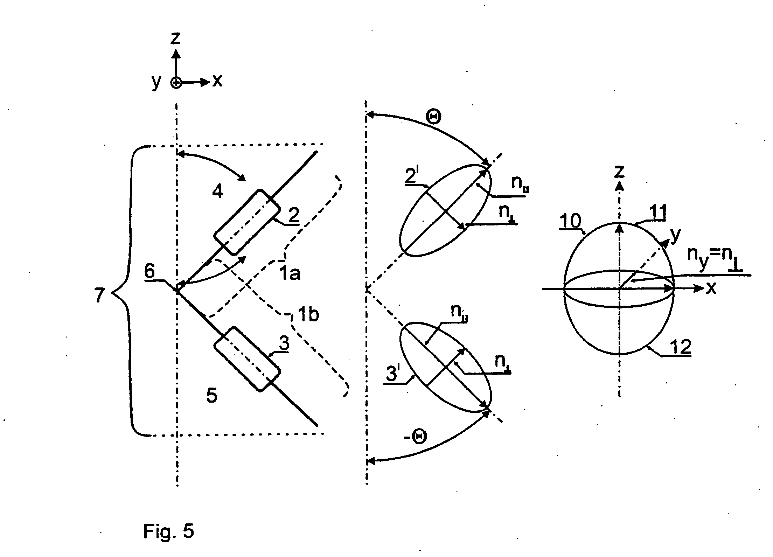

Fig. 5 zeigt die berechneten effektiven, d.h. gemittelten Brechungsindizes $<n_x>$ und $<n_z>$ einer undeformierten Helixstruktur nach Fig. 1, wobei für die Brechungsindizes der Zentralgruppen 1 und 2 die Werte $n_\parallel$=1,65, $n_\perp$ =1,5 bzw. $n_\parallel$=1,7 und $n_\perp$ = 1,45 eingesetzt wurden. Die Brechungsindexanisotropie nimmt bei wachsendem Tiltwinkel $\theta$ zunächst ab, durchläuft den Wert 0 und nimmt mit umgekehrten Vorzeichen dann wieder zu. Im völlig aufgewunden Zustand sind die Richtungen der optischen Achsen gleich.

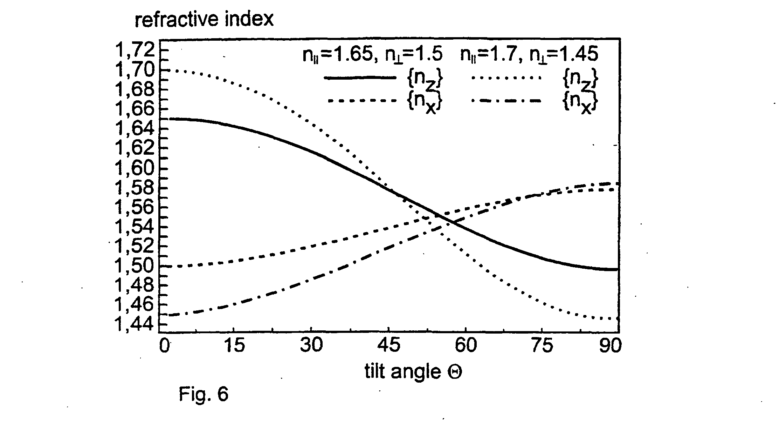

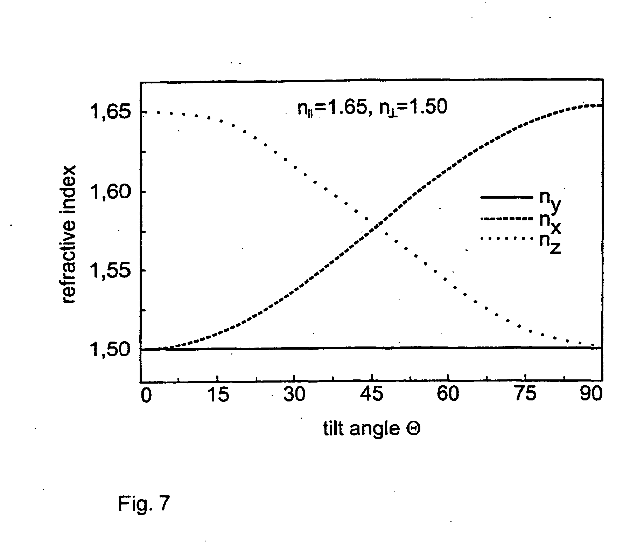

In Fig. 6 sind die berechneten effektiven Brechungsindizes $n_x$, $n_y$ und $n_z$ für den völlig entwundenen Zustand in Abhängigkeit vom Tiltwinkel $\theta$ dargestellt, wobei für die Brechungsindices der Zentralgruppen 2 und 3 zu $n_\parallel$ = 1,65 und $n_\perp$ = 1,5 gewählt wurden. Fig. 7 stellt den Maximalwert $\delta n_x^{max}$ des elektrisch kontrollierbaren Brechungsindexunterschieds $\delta n_x$ in Abhängigkeit vom Neigungswinkel $\theta$ für zwei verschiedene Sätze von Brechungsindices ($n_\parallel$ = 1,7, $n_\perp$ = 1,45 und $n_\parallel$ = 1,65, $n_\perp$ = 1,5) dar. Dieser Maximalwert ist durch die Differenz der Werte des völlig entwundenen Zustands und der ungestörten Helix gegeben, d.h. $\delta n_x^{max} = n_x - <n_x>$ Der Brechungsindex $n_z$ hängt nicht vom Feld ab und ist für beide Fälle identisch.

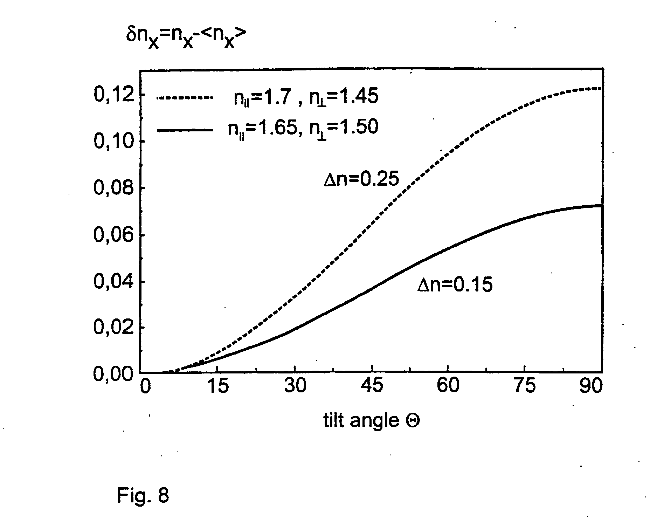

In Fig. 8 ist die numerisch berechnete Abhängigkeit des Brechungsindexunterschieds $\delta n_x$ von einem entlang der y-Achse angelegten elektrischen Feld für verschiedene Neigungswinkel $\theta$ dargestellt. Bei der Feldstärke $E_C$ findet ein Sprung auf den der völlig entwundenen Helix statt. Unterhalb des Schwellenwertes $E_C$ ist eine kontinuierliche Feldstärkenabhängigkeit von $n_x$ erkennbar. Die Größe des kontinuierlich variierbaren Bereichs ist etwa proportional zum Neigungswinkel $\theta$. Für den Bereich $\varphi$ = 40° bis 45° kann $n_x$ um bis zu 0,02 kontinuierlich durchgestimmt werden. Dies bedeutet, dass eine kontinuierliche Phasenverschiebung über einen Phasenwinkel $2\pi$ bei einer Wellenlänge von 0,63 um eine 30 μm dicke Flüssigkristallschicht erfordert. Wird die Zelle beispielsweise durch Verwendung eines Spiegels zweimal durchlaufen; reicht eine Dicke von 15 µm für die gewünschte maximale Phasenschiebung von 2π aus. Im Falle eines nichtkontinuierlichen Schaltens zwischen undeformierter und völlig entwundener Helix erreicht $\delta n_x$ Werte von 0,053 bis 0,63. Damit sind Flüssigkristallschichten mit Dicken von 10 µm bei einfacher Transmission und von 5 µm bei doppelter Durchstrahlung des Phasenmodulators zur Erzielung einer Phasenmodulation von 2π ausreichend.

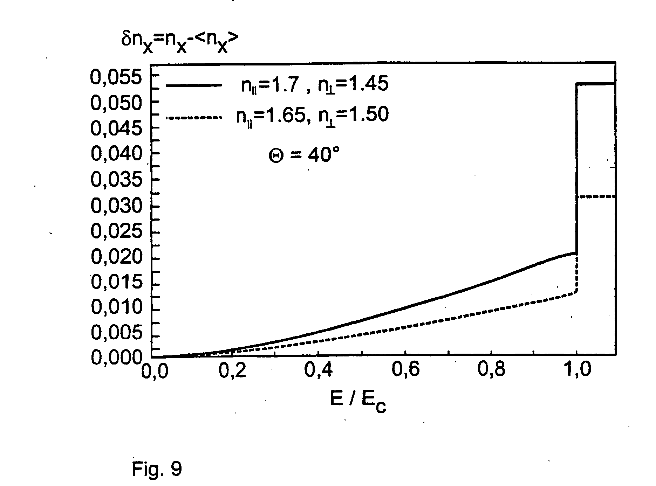

Eine beispielhafte Struktur der bogen- oder winkelförmigen Dimer-Moleküle des erfindungsgemäßen Flüssigkristalls geht aus Fig. 9 hervor, in welcher zur Verdeutlichung der relativen Lage einzelner Moleküle in einer Schicht drei Dimer-Moleküle dargestellt sind. In den beschriebenen Ausführungsformen der Erfindung sind die rigiden Zentralgruppen 2 und 3 unter allen bekannten zyklischen Molekülfragmenten, die bisher für die Synthese von Flüssigkristallen verwendet wurden, auswählbar. Dies betrifft beispielsweise Phenyle, Phenypyrimidine, Pyridine, Terphenyle, Biphenyle, Biphenylpyrimidine und beliebige andere aromatische und/oder polyzyklische Molekülfragmente. Die als optisch anisotrope, rigiden Zentralgruppen 2 und 3 eingesetzten Molekülfragmente, welche durch die molekularen Brechungsindizes $n_{\parallel}$ und $n_{\perp}$ charakterisiert sind, bestimmen die optischen Eigenschaften des Flüssigkristalls im sichtbaren Bereich des Spektrums. Aliphatische Ketten 36, 37 und 38 dienen zum Verbinden der zentralen Gruppen 2 und 3 bzw. als Flügelgruppe und sind bevorzugt Kohlenwasserstoffketten der Form $-(CH_2)_n-$, wobei n die Werte von 0 bis 16 annehmen kann. Durch die entgegengesetzte Neigung der Zentralgruppen 2 und 3 bildet sich eine Winkelspitze 6 aus. Diese Winkelspitze kann in einer besonderen Ausführungsform der Erfindung auch als Ringstruktur ausgebildet sein. Die in Fig. 9 gezeigten Dimer-Moleküle weisen erfindungsgemäß außerhalb eines rigiden Zentrums, bevorzugt in einer der Flügelgruppen eine chirale Gruppe 39 und ein laterales Dipolmoment 16 auf, was die Kontrolle des Azimutwinkels 8, 9 der Scheitelspitze 6 der Moleküle 1 durch ein elektrisches Feld ermöglicht, siehe Fig. 1. Die chirale Gruppe 39 umfasst in dem in Fig. 9 dargestellten Beispiel ein Tripod molekularer Ketten 40, 41 und 42 verschiedener Länge. Eine Vorzugsorientierung des transversalen Dipolmoments 16 entsteht durch die Behinderung der Rotations- bzw. Librationsbewegung um die Längsachse der Untereinheit, die von den Teilen 38, 3, 16 und 39 gebildet wird. Befindet sich ein solches Molekül in einer smektischen Schicht 7 in der xz-Ebene, wird das Dipolmoment bevorzugt in y-Richtung orientiert sein, da die Librationsbewegungen der Untereinheiten um deren Längsachse eingeschränkt ist. Diese Einschränkung ist mit der monoklinen Symmetrie der Umgebung des chiralen Zentrum 39 verbunden und in der Literatur beispielsweise durch R. B. Meyer et al. "Ferroelectric Liquid Cristals", J. Physique (Lett.), Band 36, Seite L69, 1975 beschrieben. Die molekularen Reste 40, 41 und 42 zur Bildung des chiralen Zentrums weisen eine unterschiedliche Länge auf und sind üblicherweise drei verschiedene aliphatische und fluorierte Fragmente, wie beispielsweise - C*H (CH_3)C_nH_{2n+1}$ oder $-C^*H(CF_3)C_nH_{2n+1}$, wobei n Werte von 2 bis 8 einnehmen kann. Durch die bevorzugte Ausrichtung des chiralen Zentrums in der in Fig. 9 gezeigten Art ist die Transversalkomponente des mit diesem chiralen Zentrum 39 verbundenen Dipolmoments 16 vorzugsweise parallel zur Normalen der Ebene ausgerichtet, in der das winkelförmige Molekül liegt. Demnach ist das Dipolmoment 16 parallel zur y-Achse ausgerichtet. Die Dipolmomente können durch verschiedene polare Gruppen eingeführt werden, z.B. -CO-O-, $-CO-CF_3$.

Wenn die beschriebenen dimeren bogenförmigen Moleküle aus zwei Zentralgruppen 2 und 3, aus den aliphatischen Ketten 36, 37, 38 und einem chiralen Zentrum 39 mit dem Dipolmoment 16 aufgebaut sind, findet eine gegenseitige Kompensation der Dipolmomente zweier Moleküle statt, wenn die beiden Dimer-Moleküle entgegengesetzt orientiert sind. Die beiden Orientierungsmöglichkeiten sind energetisch gleichwertig und daher im Mittel gleich häufig besetzt. Da die Dipolmomente der beiden Orientierungen entgegengesetzte Vorzeichen haben, würde keine spontane Polarisation auftreten. Um diese entgegengesetzte Orientierung verschiedener Dimer-Moleküle zu verhindern, weisen diese zumindest ein polyphiles Fragment auf, das asymmetrisch zur Scheitelspitze des Moleküls angeordnet ist. Im in Fig. 9 gezeigten Beispiel weisen die drei dargestellten Dimer-Moleküle zu diesem Zweck jeweils eine heterophile Gruppe 44, 44' bzw. 44" auf, die als Flügelgruppe mit der jeweiligen Zentralgruppe 2 verbunden sind. Im gezeigten Beispiel sind die genannten heterophilen Gruppen durch eine zumindest teilweise fluorierte Ketten, bevorzugt durch eine perfluorierte Kette der Struktur $- (CF_2)_n-$ mit n=4 bis 16 ausgebildet, die zumindest teilweise die aliphatischen Ketten 36, 37 oder 38 im Molekül ersetzen. Durch eine derartige Ersetzung sind die beiden möglichen Molekülorientierungen für benachbarte Moleküle innerhalb einer Schicht 7 nicht mehr energetisch gleichwertig und es wird eine Orientierung bevorzugt, bei welcher die fluorierten Gruppen benachbart sind. Diese bilden eine Subschicht 44-1 aus, welche die Flip-Flop-Bewegung der Moleküle innerhalb der smektischen Schicht 7 behindert. Daraus folgt auch die Ausbildung einer Subschicht 39-1 der chiralen Gruppen 39. Die damit bevorzugt parallele Ausrichtung der transversalen Dipolmomente 16 an den chiralen Gruppen verhindert deren Kompensation, womit eine spontane Polarisation auftritt. Ein weiterer Vorteil der Einführung fluorierter Ketten ist der im Vergleich zur smektischen C-Phase analoger Moleküle mit aliphatischen Ketten höhere optische Tiltwinkel θ. Der Neigungswinkel $\theta_F$ der fluorierten Kette ist hingegen geringer als der optische Tiltwinkel θ, was durch die größere Querschnittsfläche der fluorierten Ketten bedingt ist.

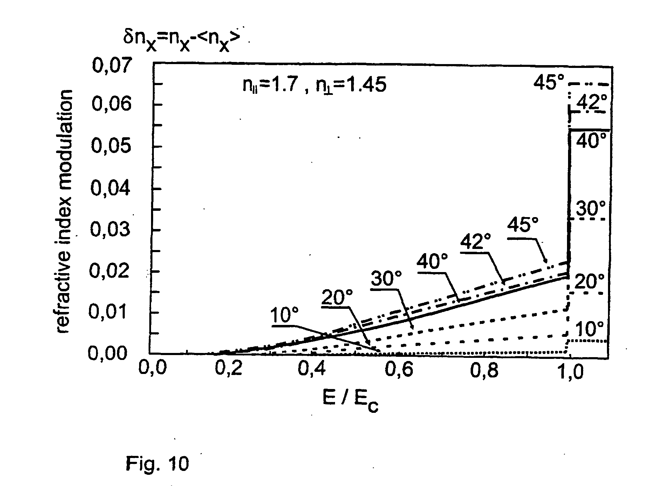

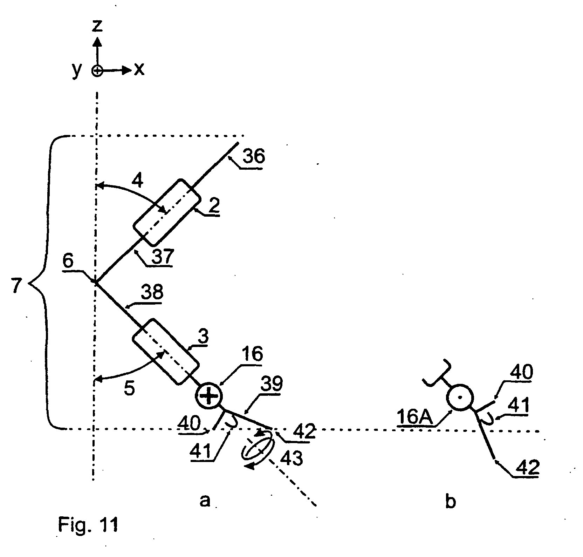

Die polyphile Gruppe in Form der fluorierten Kette kann je nach Ausführungsform der Erfindung in vielfältiger Weise innerhalb des bogenförmigen Dimer-Moleküls angeordnet sein, wobei jedoch die Position asymmetrisch zur Scheitelspitze gewählt sein muss. In dem in Fig. 10 gezeigten zweiten Beispiel ist die perfluorierte Kette 44 zwischen der Zentralgruppe 3 und der Scheitelspitze angeordnet. Wieder resultiert aus der Gestaltung des Dimer-Moleküls eine stabilisierende Subschicht 44-1, welche das Auftreten einer spontanen Polarisation in der Schicht 7 verursacht. Im in Fig. 11 gezeigten Beispiel ist die perfluorierte Gruppe zwischen der Gruppe, welche das Dipolmoment 16 trägt und dem chiralen Zentrum 39 eingebaut. Allgemein lässt sich feststellen, dass die Anordnung der Kette 44 außerhalb der Zentraleinheiten 2 und 3 aufgrund der höheren polyphilen Asymmetrie gegenüber Anordnungen zwischen den beiden Zentraleinheiten 2 und 3 vorzuziehen sind, da sie eine höhere Separation der fluorierten Molekülteile 44, 44', 44" bewirkt, siehe Fig. 9.

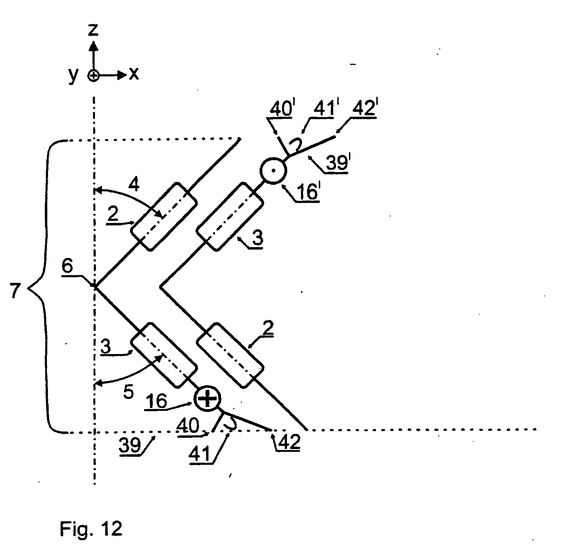

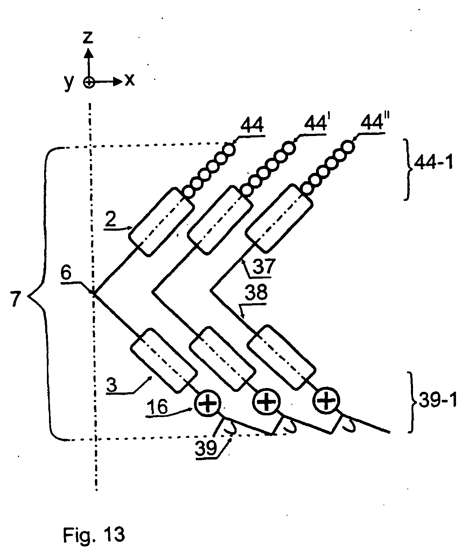

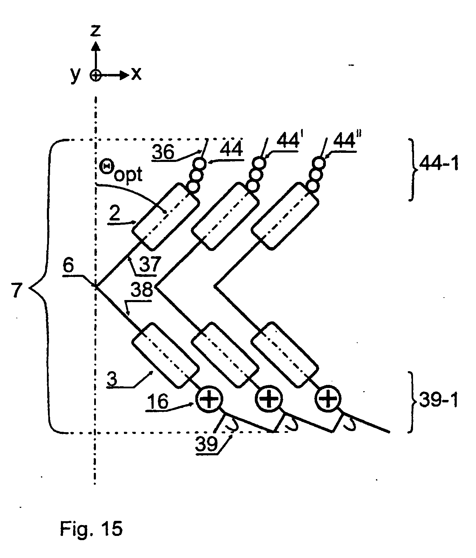

Lamellare, insbesondere smektische Schichten 7 des erfindungsgemäßen flüssigkristallinen Materials mit bogen- oder winkelförmigen Molekülen können sowohl eine ferroelektrische Überstruktur, bei welchen die gemittelten Transversaldipolmomente benachbarter Schichten zumindest annähernd gleiche Richtungen aufweisen als auch eine antiferroelektrische Überstruktur besitzen, bei welchen die gemittelten Transversaldipolmomente benachbarter Schichten etwa $180°$ gegeneinander um die z-Achse verdreht sind. Eine erste ferroelektrische Überstruktur ist in Fig. 12 dargestellt, wobei die polyphile Gruppe als Flügelgruppe an die Zentraleinheit 2 angekoppelt ist. Die Scheitelspitzen 6 benachbarter Schichten 7 und 7-1 zeigen etwa in die gleiche Richtung. Die Nettodipolmomente der einzelnen Dimer-Moleküle summieren sich zur spontanen Polarisation. Ein Beispiel für eine antiferroelektrische Überstruktur ist in Fig. 13 angegeben. Die Scheitelspitzen 6 und 6a benachbarter Schichten 7 bzw. 7a zeigen etwa in die gleiche Richtung. Die Nettodipolmomente benachbarter Schichten zeigen dabei etwa in die entgegengesetzte Richtung. In Fig. 15 ist eine weitere antiferroelektrische Überstruktur dargestellt, bei welcher wie in Fig. 13 die polyphile Gruppe als Flügelgruppe an der Zentraleinheit 2 angekoppelt ist. Im gezeigten Beispiel sind die Scheitelspitzen 6 und 6a benachbarter Schichten genauso wie die zugehörigen Nettodipolmomente entgegengerichtet.

Die optischen Eigenschaften der gezeigten ferroelektrischen und antiferroelektrischen Strukturen sind jedoch gleich, wenn die helikale Ganghöhe der Struktur kleiner als die Wellenlänge des Lichtes ist. Die Hauptachsen des Indexellipsoids ändern unter Einfluss eines elektrischen Feldes in y-Richtung ihre Richtung nicht und es tritt nur eine Variation des gemittelten Brechungsindexes $<n_x>$ auf. Demnach wird beim Anlegen eines elektrischen Feldes in y-Richtung nur der in x-Richtung polarisierte Anteil von sich in y-Richtung ausbreitendem Licht phasenmoduliert, ohne dass zusätzlich eine Polarisationsmodulation auftritt.

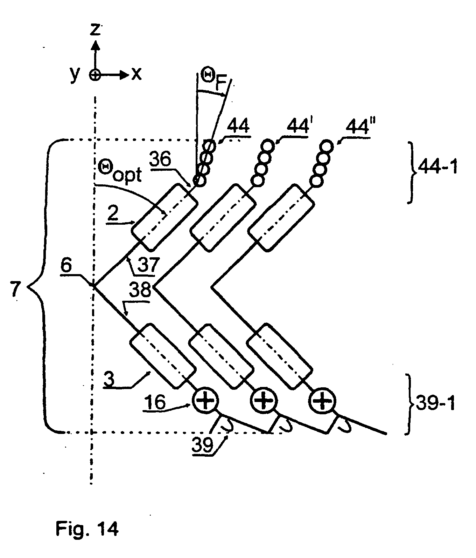

Die spontane Polarisation und die Ganghöhe der helikalen Überstruktur, die durch das chirale Zentrum 39 und das Transversaldipolmoment 16 im Wesentlichen bestimmt werden, können durch Einbau einer zweiten Gruppe 46, die ebenfalls ein chirales Zentrum und ein Querdipolmoment enthält, in die Dimer-Moleküle modifiziert werden, siehe Fig. 14, welche eine beispielhafte Struktur mit polyphilen Molekülen mit zwei chiralen Zentren 39 und 46 und zwei transversalen Dipolmomenten 16 und 45 zeigt. Die perfluorierte Kette 44 befindet sich zwischen der Zentralgruppe 3 und der dipolmomenttragenden Gruppe 16. Die zweite chirale Gruppe 46 weist eine andere Form und/oder ein anderes Transversaldipolmoment auf. Eine andere Form wird beispielsweise durch die Verwendung andrer Molekülfragmente zur Bildung des chiralen Zentrums erreicht. Im günstigsten Fall zeigen die Transversaldipolmomente 16 und 45 beider Untereinheiten in die gleiche Richtung, wie in dem in Fig. 14 gezeigten Beispiel, in welchem sich eine ferroelektrische Überstruktur ausbildet.

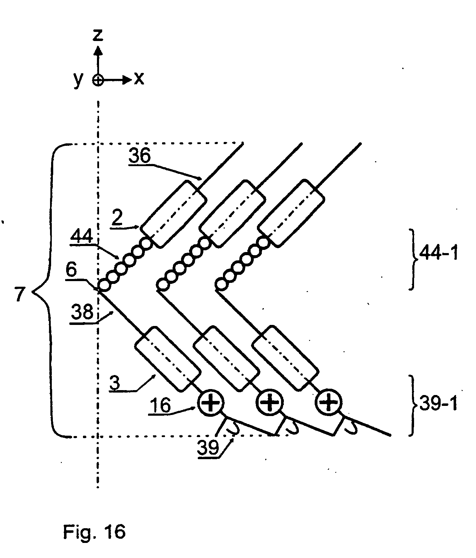

Die erfindungsgemäßen flüssigkristallinen Materialien eignen sich für die Realisierung verschiedener optischer Phasenmodulatoren, wobei eine gleichzeitig auftretende Polarisationsmodulation verhindert werden kann. Ein Beispiel eines derartigen Phasenmodulators ist in Fig. 16 angegeben. Der erfindungsgemäße Flüssigkristall 47 ist zwischen transparenten Elektroden 48, 49 angeordnet, die auf Glasflächen 50, 51 aufgedampft sind. Die normale Richtung z der helikalen Schichtenstruktur verläuft senkrecht zur Einstrahlrichtung 52. An die Elektroden wird eine Spannung angelegt, womit sich ein elektrisches Feld parallel zur y-Achse ausbildet. Licht fällt mit einer vorgegebenen linearen Polarisation 53 parallel zur x-Achse ein und tritt aus dem Phasenmodulator mit der Polarisation 55 aus, wobei beide Polarisationen identisch sind. Durch das Einwirken eines äußeren elektrischen Feldes auf den Flüssigkristall wird wie oben beschrieben, die Helix entwunden, was eine reine Phasenmodulation des den Phasenmodulator transmittierenden Lichtes zur Folge hat. Die Polarisationsebene des einfallenden Lichtes stimmt dabei mit der Ebenen der smektischen Schichten, das heißt der xy-Ebene überein.

Neben der in Fig. 16 dargestellten Ausführungsform eines Phasenmodulators sind auch eine Vielzahl anderer Phasenmodulatoren aufbaubar. Beispielsweise kann ein Spiegel außerhalb einer der transparenten Elektrode montiert sein oder die transparente Elektrode 49 ersetzen. Weiterhin ist es auch möglich, die ganzflächigen Elektroden durch eine pixelierte Elektrodenstruktur zu ersetzen, um eine elektrisch kontrollierbare ortsaufgelöste Phasenmodulation zu ermöglichen.

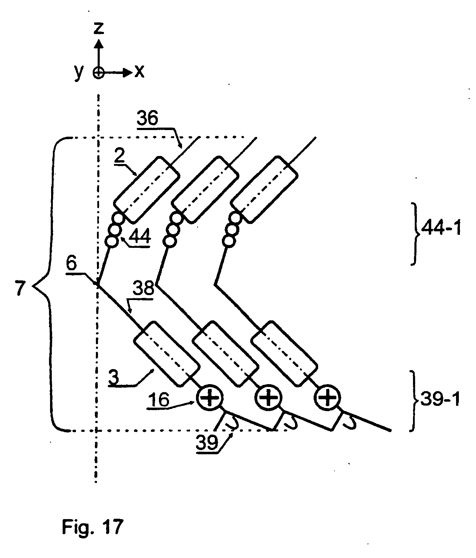

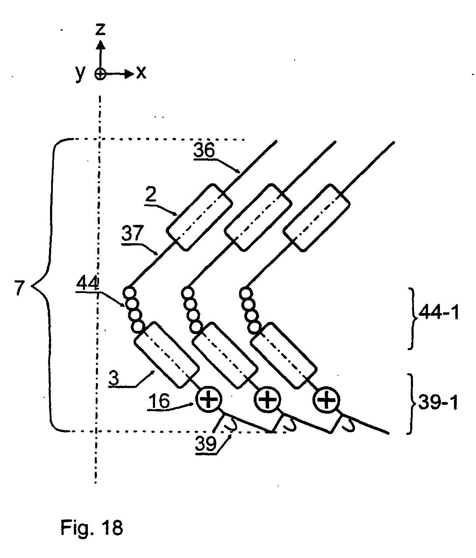

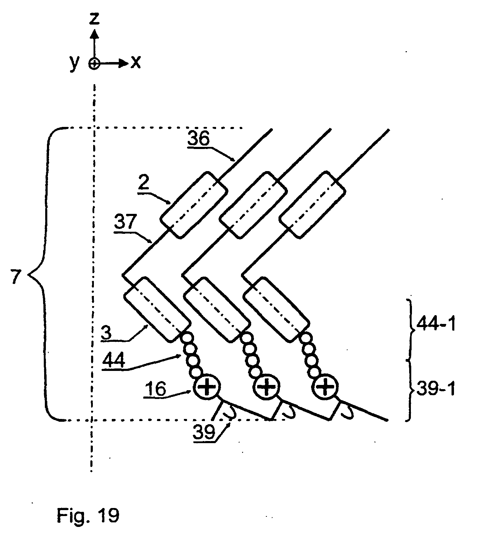

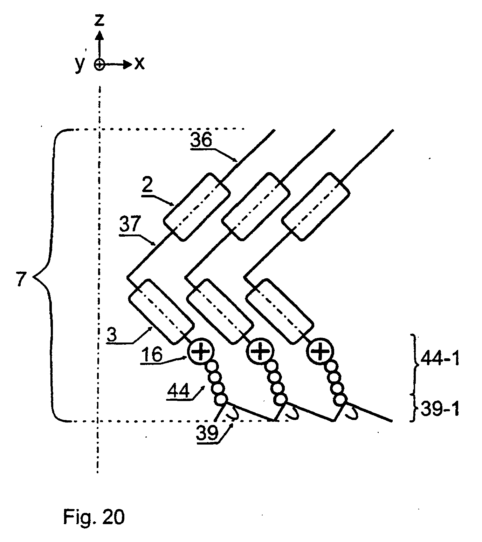

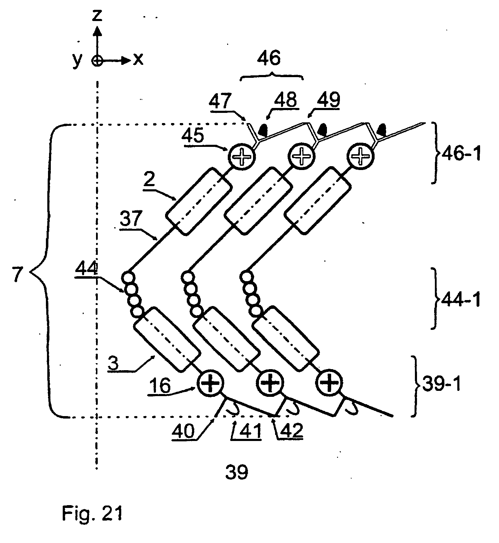

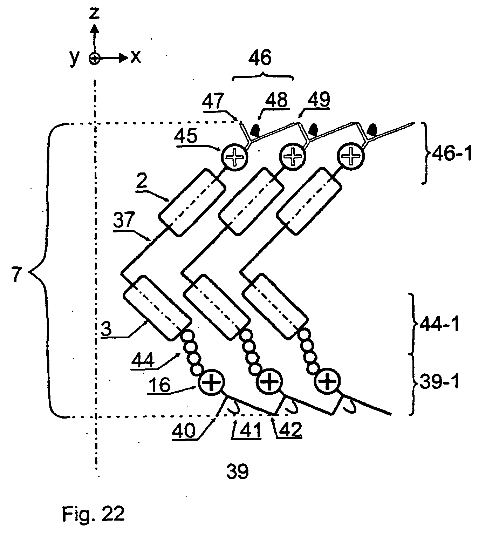

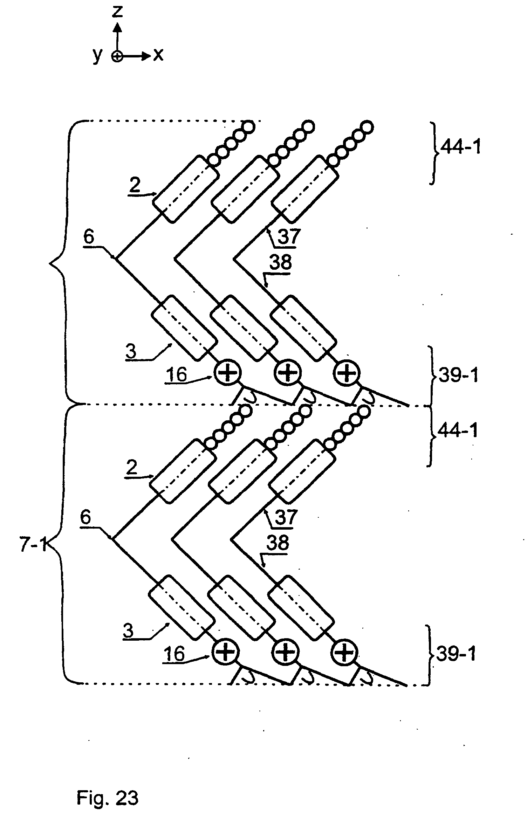

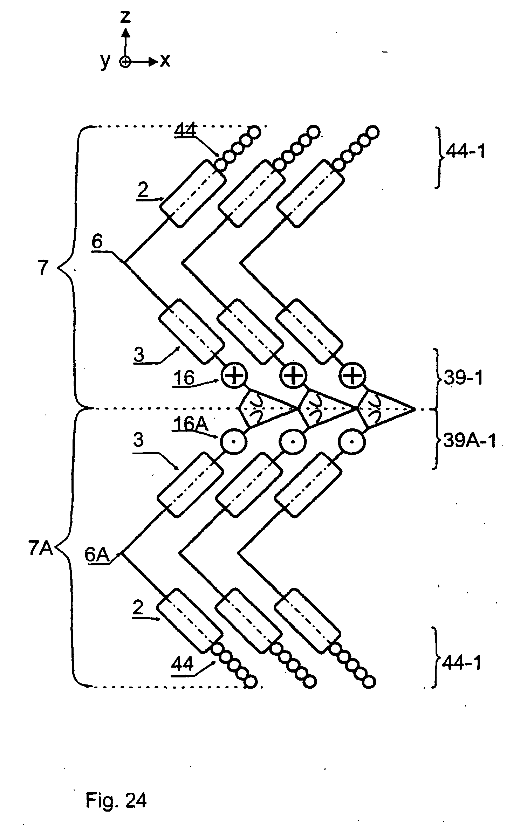

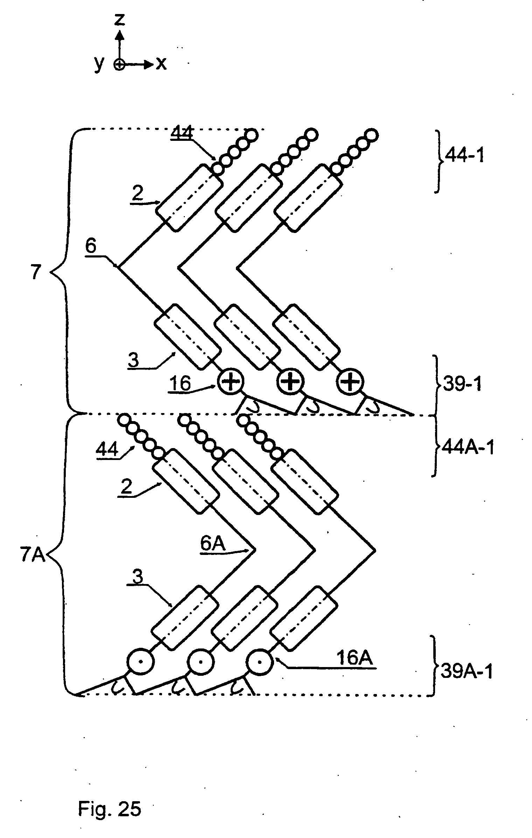

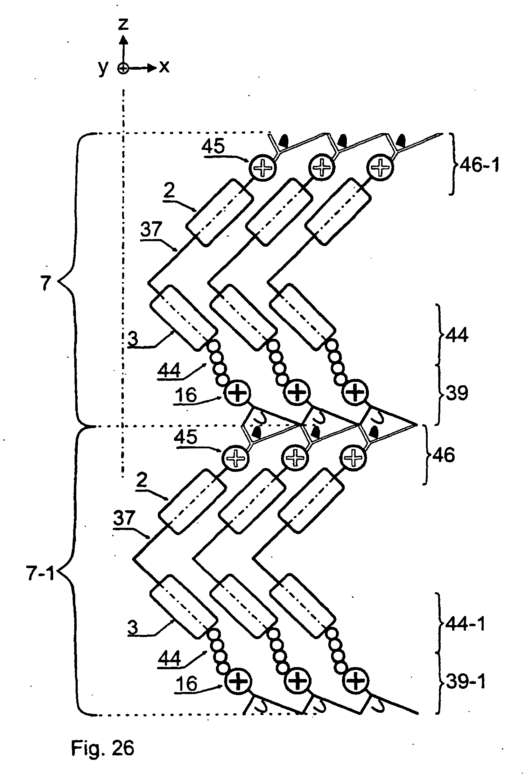

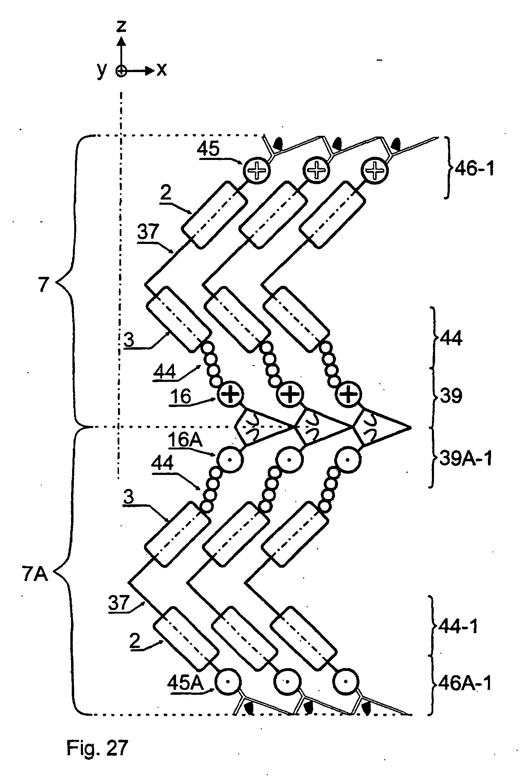

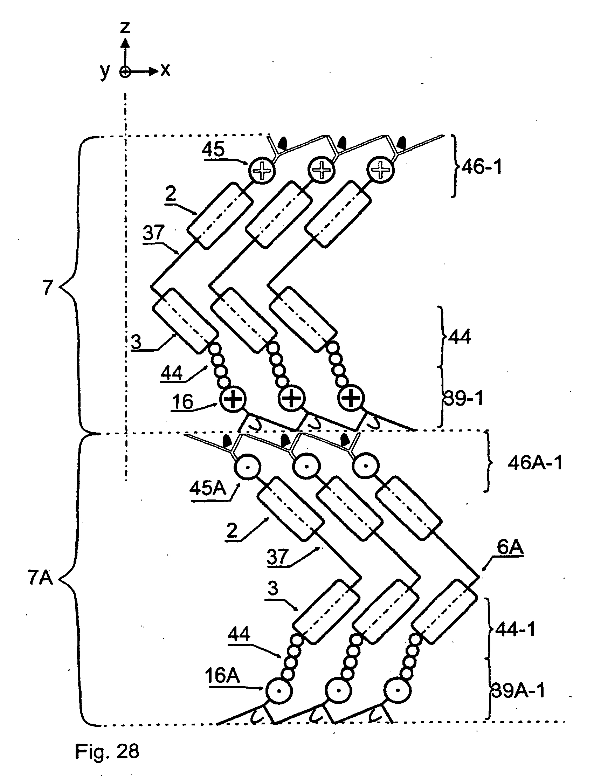

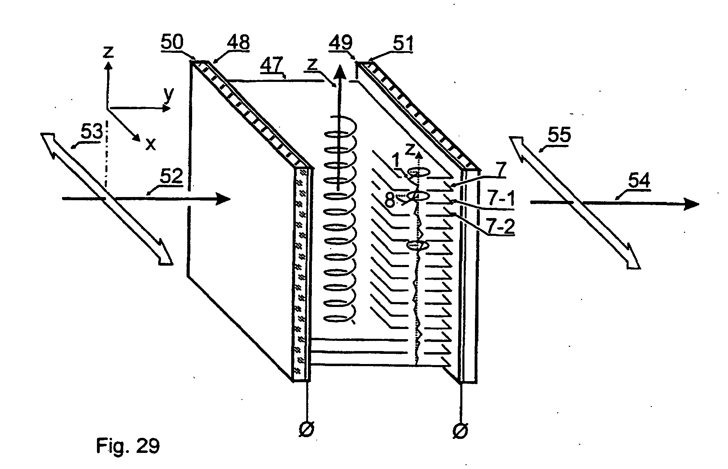

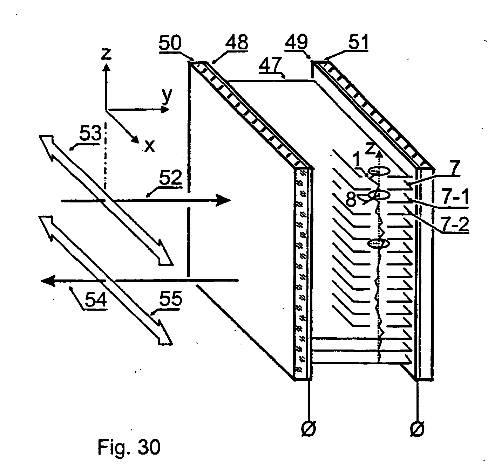

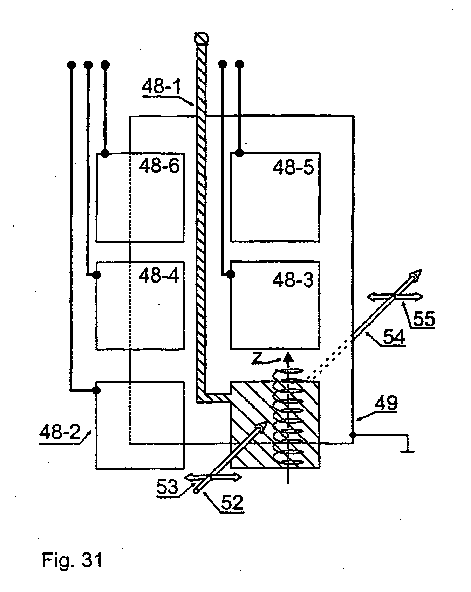

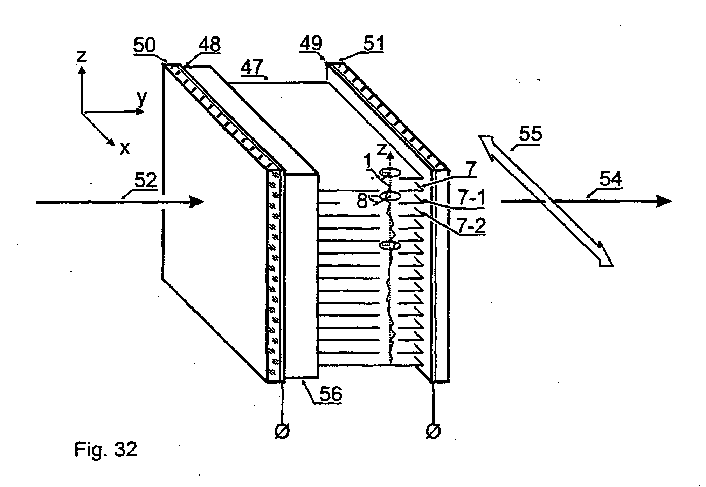

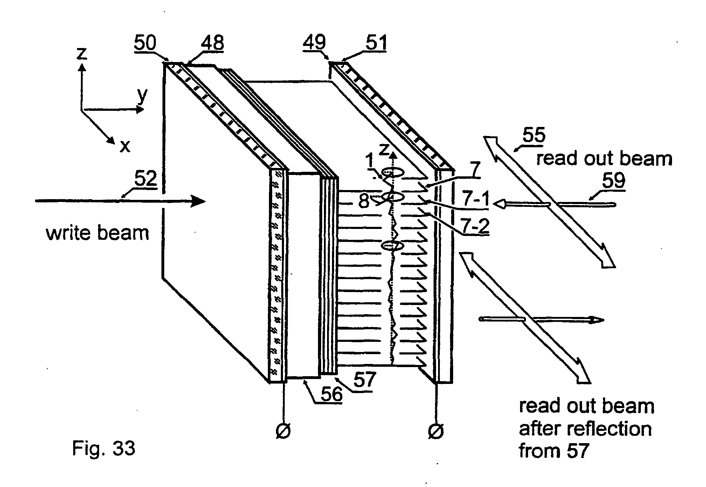

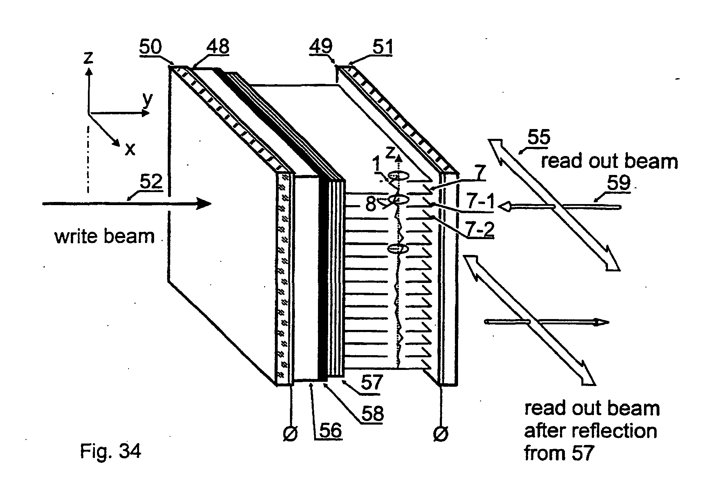

In einer weiteren, in Fig. 17 dargestellten Ausführungsform kann zur Bereitstellung eines optisch adressierbaren ortsaufgelösten Phasenmodulation eine photoleitende Schicht 56 über einer transparenten Elektrode 48 aufgebracht werden. Eine lichtabsorbierende Schicht 58 zwischen der photoleitenden Schicht 56 und dem Spiegel 57 führt zu einer stärkeren Entkopplung von Schreibstrahl 52 und Lesestrahl 59, was beispielsweise die Realisierung von Lichtverstärkern mit hoher Verstärkungsrate ermöglicht.

## Patentansprüche

1. Flüssigkristallines Material mit einer lamellaren Schichtenstruktur (7, 7-1, 7-2, 7-3), **gekennzeichnet durch** bogen- oder winkelförmige Dimer-Moleküle (1), die jeweils zwei Zentraleinheiten (2, 3) umfassen, wobei die Längsachsen der beiden Zentraleinheiten zur Normalenrichtung (z) der Schichten zumindest näherungsweise entgegengesetzte Neigungswinkel (4, 5) aufweisen und wobei unter Einfluss eines elektrischen Feldes ($E_y$) ein gemittelter Brechungsindex ($<n_x>$) variierbar ist.

2. Flüssigkristallines Material nach Anspruch 1, **dadurch gekennzeichnet, dass** der Betrag der beiden Neigungswinkeln (4, 5) im Bereich zwischen etwa 10° bis 90° liegt.

3. Flüssigkristallines Material nach Anspruch 1 oder 2, **dadurch gekennzeichnet, dass** beide Zentraleinheiten (2, 3) unter Ausbildung einer Scheitelspitze (6) miteinander zum winkel- oder bogenförmigen Molekül (1) verbunden sind.

4. Flüssigkristallines Material nach Anspruch 3, **dadurch gekennzeichnet, dass** beide Zentraleinheiten (2, 3) über eine neutrale, molekulare Kette verbunden sind.

5. Flüssigkristallines Material nach Anspruch 3 oder 4, **dadurch gekennzeichnet, dass** die Scheitelspitzen (6) von Dimer-Molekülen (1) benachbarter Schichten (7, 7-1; 7-1, 7-2) annähernd gleichgerichtet sind.

6. Flüssigkristallines Material nach einem der Anspruch 3 bis 5 **dadurch gekennzeichnet, dass** die Scheitelspitzen (6) von Dimer-Molekülen (1) benachbarter Schichten (7, 7A; 7-1, 7A-1; 7-2, 7A-2) annähernd entgegengesetzt gerichtet sind, wodurch sich eine Doppelschicht-Struktur (7, 7A; 7-1, 7A-1;7-2, 7A-2) ausbildet.

7. Flüssigkristallines Material nach den Anspruch 5, **dadurch gekennzeichnet, dass** bei Abwesenheit eines äußeren elektrischen Feldes eine helikale Struktur mit einer vorgegebenen Ganghöhe ausgebildet ist, in welcher sich der Azimutwinkel (8, 9) die Scheitelspitzen (6) aufeinanderfolgenden Schichten (7, 7-1) gleichmäßig um einen vorgegebenen Wert ändert, so dass die Scheitelspitzen (6) entlang der z-Richtung rotieren.

8. Flüssigkristallines Material nach Anspruch 6, **dadurch gekennzeichnet, dass** bei Abwesenheit eines äußeren elektrischen Feldes eine helikale Struktur mit Doppelschichten (7, 7A;7-1, 7A-1; 7-2, 7A-2) und einer vorgegebenen Ganghöhe ausgebildet ist, in welcher sich der Azimutwinkel eines Paares von Scheitelspitzen (6, 6A) aufeinanderfolgender Doppelschichten gleichmäßig um einen vorgegebenen Wert ändert, so dass die Paare von Scheitelspitzen entlang der z-Richtung rotieren.

9. Flüssigkristallines Material nach einem der Ansprüche 1 bis 8, **dadurch gekennzeichnet, dass** die Moleküle (1) zumindest ein transversales Dipolmoment (16, 16A) aufweisen.

10. Flüssigkristallines Material nach einem der Ansprüche 1 bis 9, **dadurch gekennzeichnet, dass** die Moleküle (1) zumindest ein chirales Zentrum (39) aufweisen.

11. Flüssigkristallines Material nach Anspruch 10, **dadurch gekennzeichnet, dass** das zumindest eine chirale Zentrum (39) außerhalb der beiden Zentraleinheiten (2, 3) mit dem restlichen Molekülteil verbunden ist.

12. Flüssigkristallines Material nach einem der Ansprüche 1 bis 11, **dadurch gekennzeichnet, dass** die Moleküle (1) zwischen den beiden Zentraleinheiten (2, 3) und/oder als Flügelgruppen zumindest ein aliphatisches Fragment (36, 37, 38) aufweisen.

13. Flüssigkristallines Material nach Anspruch 12, **dadurch gekennzeichnet, dass** das aliphatische Fragment (36, 37, 38) von Kohlenwasserstoffketten der Form $-(CH_2)_n$-gebildet sind, wobei n die Werte von 0 bis 16 annimmt.

14. Flüssigkristallines Material nach einem der Ansprüche 1 bis 13, **dadurch gekennzeichnet, dass** die Moleküle (1) zumindest ein polyphiles Fragment (44) umfassen, wobei das zumindest eine polyphile Fragment asymmetrisch zur Scheitelspitze angeordnet ist.

15. Flüssigkristallines Material nach Anspruch 14, **dadurch gekennzeichnet, dass** das polyphile Fragment zumindest eine perfluorierte Kette der Form $-(CF_2)_n$-aufweist, wobei n die Werte von 4 bis 16 einnimmt.

16. Flüssigkristallines Material nach einem der Ansprüche 7 bis 15, **dadurch gekennzeichnet, dass** die helikale Ganghöhe ohne äußeres elektrisches Feld im Bereich von 50 bis 1400 Nanometern liegt.

**17.** Vorrichtung zur Modulation von Licht, insbesondere zur Phasenmodulation von Licht, **gekennzeichnet durch** flüssigkristallines Material nach einem der Ansprüche 1 bis 16.

**18.** Vorrichtung nach Anspruch 17, **gekennzeichnet durch** Mittel zum Erzeugen eines elektrischen Feldes im wesentlichen senkrecht zur Schichtennormalen (z) des flüssigkristallinen Materials.

**Claims**

**1.** Liquid-crystalline material with a lamellar layer structure (7, 7-1, 7-2, 7-3), **characterized by** arc- or angle-shaped Dimer molecules (1), said Dimer molecules (1) each having two central units (2, 3), the longitudinal axes of the two central units having angles of inclination (4, 5) at least approximately opposed to the normal direction (z) of the layers, an averaged refractive index ($<n_x>$) being variable under the influence of an electric field ($E_y$).

**2.** Liquid-crystalline material according to claim 1, **characterized in that** the value of the two angles of inclination (4, 5) is in the range between approximately 10° and 90°.

**3.** Liquid-crystalline material according to claim 1 or 2, **characterized in that** both central units (2, 3) are interconnected to form the angle- or arc-shaped molecule (1), forming a vertex tip (6).

**4.** Liquid-crystalline material according to claim 3, **characterized in that** both central units (2, 3) are connected through the intermediary of a neutral, molecular chain.

**5.** Liquid-crystalline material according to claim 3 or 4, **characterized in that** the vertex tips (6) of the Dimer molecules (1) of adjacent layers (7, 7-1; 7-1, 7-2) are directed approximately in the same direction.

**6.** Liquid-crystalline material according to any one of claims 3 to 5, **characterized in that** the vertex tips (6) of the Dimer molecules (1) of adjacent layers (7, 7A; 7-1, 7A-1; 7-2, 7-A2) are directed approximately in opposite directions, this resulting in the formation of a double-layer structure (7, 7A; 7-1, 7A-1; 7-2, 7-A2).

**7.** Liquid-crystalline material according to claim 5, **characterized in that**, in the absence of an external electric field, a helical structure with a specified lead is formed, in which helical structure the azimuth angle (8, 9) changes the vertex tips (6) of consecutive layers (7, 7-1) uniformly by a specified value, with the result that the vertex tips (6) rotate along the z-direction.

**8.** Liquid-crystalline material according to claim 6, **characterized in that**, in the absence of an external electric field, a helical structure with double layers (7, 7A; 7-1, 7A-1; 7-2, 7-A2) and a specified lead is formed, in which helical structure the azimuth angle of a pair of vertex tips (6, 6A) of consecutive double layers is uniformly changed by a specified value, with the result that the pairs of vertex tips rotate along the z-direction.

**9.** Liquid-crystalline material according to any one of claims 1 to 8, **characterized in that** the molecules (1) have at least one transversal dipole moment (16, 16A).

**10.** Liquid-crystalline material according to any one of claims 1 to 9, **characterized in that** the molecules (1) have at least one chiral centre (39).

**11.** Liquid-crystalline material according to claim 10, **characterized in that** the at least one chiral centre (39) is connected outside of the two central units (2, 3) central units (2, 3) to the remaining part of the molecule.

**12.** Liquid-crystalline material according to any one of claims 1 to 11, **characterized in that** the molecules (1) have between the two central units (2, 3) and/or in the form of terminal groups at least one aliphatic fragment (36, 37, 38).

**13.** Liquid-crystalline material according to claim 12, **characterized in that** the aliphatic fragment (36, 37, 38) is formed by hydrocarbon chains of the form $-(CH_2)_n-$, wherein n assumes the values from 0 to 16.

**14.** Liquid-crystalline material according to any one of claims 1 to 13, **characterized in that** the molecules (1) have at least one polyphilic fragment (44), the at least one polyphilic fragment being arranged asymmetrically with respect to the vertex tip.

**15.** Liquid-crystalline material according to claim 14, **characterized in that** the polyphilic fragment has at least one perfluorated chain of the form $-(CF_2)_n-$, wherein n assumes the values from 4 to 16.

**16.** Liquid-crystalline material according to any one of claims 7 to 15, **characterized in that** the helical lead without external electric field is in the range from 50 to 1400 nanometres.

**17.** Device for the modulation of light, in particular for the phase modulation of light, **characterized by** liquid-crystalline material according to any one of claims 1 to 16.

**18.** Device according to claim 17, **characterized by** means for generating an electric field substantially perpendicular to the normal (z) of the layers of the liquid-crystalline material.

## Revendications

**1.** Matériau à cristaux liquides avec une structure de couches lamellaire (7, 7-1, 7-2, 7-3) **caractérisé par** des molécules dimères (1) arquées ou angulaires contenant deux unités centrales (2, 3) dont les axes longitudinaux présentent des angles d'inclinaison (4, 5) au moins approximativement opposés par rapport à la normale (z) des couches, un indice de réfraction moyen ($<n_z>$) variant sous l'influence d'un champ électrique ($E_y$).

**2.** Matériau à cristaux liquides, selon la revendication 1, **caractérisé en ce que** les deux angles d'inclinaison (4, 5) sont compris entre 10° et 90°.

**3.** Matériau à cristaux liquides, selon l'une des revendications 1 ou 2, **caractérisé en ce que** les deux unités centrales (2, 3) sont reliées ensemble en une molécule arquée ou angulaire (1) avec formation d'une pointe (6).

**4.** Matériau à cristaux liquides, selon la revendication 3, **caractérisé en ce que** les deux unités centrales (2, 3) sont reliées via une chaîne moléculaire neutre.

**5.** Matériau à cristaux liquides, selon l'une des revendications 3 ou 4, **caractérisé en ce que** les pointes (6) des molécules dimères (1) de couches adjacentes (7, 7-1, 7-2) sont approximativement orientées dans la même direction.

**6.** Matériau à cristaux liquides, selon l'une des revendications 3 à 5, **caractérisé en ce que** les pointes (6) des molécules dimères (1) de couches adjacentes (7, 7A, 7-1, 7A-1, 7-2, 7A-2) sont approximativement opposées et forment une structure à double couche (7, 7A, 7-1, 7A-1, 7-2, 7A-2).

**7.** Matériau à cristaux liquides, selon la revendication 5, **caractérisé en ce que**, en l'absence d'un champ électrique externe, une structure hélicoïdale se forme avec un pas prédéfini dans laquelle l'angle azimutal (8, 9) des pointes (6) des couches successives (7, 7-1) varie uniformément autour d'une valeur prédéterminée de sorte que les pointes (6) pivotent le long de la direction z.

**8.** Matériau à cristaux liquides, selon la revendication 6, **caractérisé en ce que**, en l'absence d'un champ électrique externe, une structure hélicoïdale avec des couches doubles (7, 7A, 7-1, 7A-1, 7-2, 7A-2) se forme avec un pas prédéfini, dans laquelle l'angle azimutal d'une paire de pointes (6) de couches doubles successives varie uniformément autour d'une valeur prédéterminée de sorte que les paires de pointes pivotent le long de la direction z.

**9.** Matériau à cristaux liquides, selon l'une des revendications 1 à 8, **caractérisé en ce que** les molécules (1) présentent au moins un moment dipolaire transversal (16, 16A).

**10.** Matériau à cristaux liquides, selon l'une des revendication 1 à 9, **caractérisé en ce que** les molécules (1) présentent au moins un centre chiral (39).

**11.** Matériau à cristaux liquides, selon la revendication 10, **caractérisé en ce qu'**au moins un centre chiral (39) à l'extérieur des deux unités centrales (2, 3) est relié à la partie restante de la molécule.

**12.** Matériau à cristaux liquides, selon l'une des revendications 1 à 11, **caractérisé en ce que** les molécules (1) présentent au moins un fragment aliphatique (36, 37, 38) entre les deux unités centrales (2, 3) et / ou tous les groupes alaires.

**13.** Matériau à cristaux liquides, selon la revendication 12, **caractérisé en ce que** le fragment aliphatique (36, 37, 38) présente des chaînes d'hydrocarbure de la forme - $(CH_2)_n$-, la valeur n étant comprise entre 0 et 16.

**14.** Matériau à cristaux liquides, selon l'une des revendications 1 à 13, **caractérisé en ce que** les molécules (1) contiennent au moins un fragment polyphile (44) et le fragment polyphile est placé de manière asymétrique par rapport à la pointe.

**15.** Matériau à cristaux liquides, selon la revendication 14, **caractérisé en ce que** le fragment polyphile présente au moins une chaîne perfluorée de la forme - $(CF_2)_n$-, la valeur n étant comprise entre 4 et 16.

**16.** Matériau à cristaux liquides, selon l'une des revendications 1 à 15, **caractérisé en ce que** le pas hélicoïdal est compris entre 50 et 1400 nanomètres sans champ électrique externe.

**17.** Dispositif pour la modulation de lumière, en particulier pour la modulation de phase de la lumière, **caractérisé par** un matériau à cristaux liquides selon l'une des revendications 1 à 16.

**18.** Dispositif, selon la revendication 17, **caractérisé**

**par** un procédé pour la création d'un champ électrique externe approximativement perpendiculaire à la normale des couches (z) du matériau à cristaux liquides.

Fig. 1

Fig. 2

Fig. 3

Fig. 4

Fig. 5

Fig. 6

Fig. 7

$\delta n_x = n_x - <n_x>$

Fig. 8

Fig. 9

Fig. 10

Fig. 11

Fig. 12

Fig. 13

Fig. 14

26

Fig. 15

Fig. 16

Fig. 17

Fig. 18

Fig. 19

Fig. 20

Fig. 21

Fig. 22

Fig. 23

Fig. 24

Fig. 25

Fig. 26

Fig. 27

Fig. 28

EP 1 157 078 B1

Fig. 29

41

Fig. 30

Fig. 31

Fig. 32

Fig. 33

Fig. 34